# EUROPEAN PATENT APPLICATION

(11) **EP 4 721 849 A1**
(43) Date of publication of application: **08.04.2026**
(21) Application number: 24204167.1
(22) Date of filing: 02.10.2024
(51) Int. Cl.: B01J 4/00, C08F 2/01, C08F 6/00

(54) **DEVICE AND PROCESS FOR PREPARING A FEED STREAM FOR SOLUTION POLYMERIZATION**

(71) Applicant: Borealis GmbH, 1020 Vienna (AT)
(72) Inventor: BERGSTRA, Michiel, 3583 Beringen (BE); SLEIJSTER, Henry, 6161 Sittard Geleen (NL); ERIKSSON, Erik, 444 86 Stenungsund (SE); ZITTING, Samuli, 06850 Kulloo (FI)
(74) Representative: Maiwald GmbH

(57) **Abstract**

A feeding device for preparing a feed stream for a solution polymerization, comprising a feed vessel, the feed vessel comprising a top zone and a bottom zone; a feed outlet for withdrawing the feed stream, wherein the feed outlet is fluidly connected with the bottom zone; a waste outlet for withdrawing a waste vapor stream, wherein the waste outlet is fluidly connected with the top zone; an absorber positioned below the top zone; a first inlet for introducing a fresh liquid stream into or on top of the absorber, wherein the first inlet is fluidly connected with the absorber; a first heat exchanger positioned upstream of the first inlet for cooling the fresh liquid stream prior to_introducing the fresh liquid stream into or on top of the absorber; a second inlet for introducing a recycle liquid stream, wherein the second inlet is positioned below the first inlet; and a third inlet for introducing a recycle vapor stream, wherein the third inlet is positioned below the second inlet and above the feed outlet, wherein the feed vessel does not comprise a heat exchanger in the top zone.

## Description

### Technical Field of the Invention

The present invention is concerned with a device and a process for preparing a feed stream for solution polymerization.

### Background of the Invention

In solution polymerization processes it is necessary that all reactants are dissolved in the solvent upstream of the reactor. Therefore, reactant(s) and solvent(s) are typically brought together, mixed and dissolved before they are introduced into the polymerization reactor. Such process is generally understood as the preparation of the feed stream of a solution polymerization reactor.

The feed stream of a solution polymerization reactor can be prepared by mixing fresh solvent as well as fresh reactants such as monomer and/or comonomer(s). However, parts of the mixture leaving the reactor are preferably recycled and introduced into the preparation of the feed stream again. Such setup has the advantage of recycling not only material, but also energy, as the recycled streams still provide certain temperatures and pressures besides the unreacted reactants and solvent comprised therein. For example, the monomer conversion of the polymerization process is not 100%. Hence, in order to increase the monomer factor, unreacted monomer must be recovered from the reactor effluent and recycled back. Recycling should be done in the most energy efficient method so with minimum loss of energy.

However, these recycle streams also comprise certain components, the concentration of which should be controlled, i.e. ideally reduced. One category of such components comprises volatile inert components, such as methane and ethane. Not removing these inert components can lead to accumulation thereof upon recycling. Such accumulation can lead to disturbance in the process and offset of the reactor control and flash operation. Therefore, it is a general object to remove such volatile inert components in the feed preparation step.

Another category comprises hydrogen, which is usually used as a chain transfer agent in polymerization processes. For certain polymer products, such as lower melt flow grades (MFR₂ ≤ 1), it is needed to control (i.e. at least partially remove) the amount of hydrogen in the feed stream to prevent shifting of the product away from the desired property set and optimal operating window/settings. This is especially important, as for example certain single site catalysts produce hydrogen under the used reaction conditions.

Furthermore, these recycle streams typically consist of condensed products (liquid) and uncondensed products (vapor). Volatile inert components and hydrogen are typically present in the vapor phase but can also be present in the liquid phase. Removing volatile components from the liquid phase or a combined liquid/gaseous phase is usually done by simply venting the volatile components off, i.e. by letting the volatiles evaporate upon a sudden reduction of pressure. However, in case of solution polymerization also volatile reactants are present in the recycle streams such as monomers, such as ethylene or propylene, and optionally comonomers such as butene-1. Hence, simply venting off above-mentioned volatile components would inevitably lead to a significant loss of reactants, which still could be used in the solution polymerization process.

Patent application EP 4 000 723 A1 describes a process for preparing such a feed stream for solution polymerization. However, in this process, condensation occurs within the feed vessel rendering the device and process less energy efficient. Furthermore, it is always a desire to increase recovery efficiency, in particular monomer recovery efficiency.

### Summary of the Invention

Hence, it is an object of the present invention to provide a device and a process for more efficiently preparing a feed stream for solution polymerization, preferably for solution olefin polymerization.

It is a further object of a present invention to provide a device and a process for preparing a feed stream for solution polymerization, preferably for solution olefin polymerization, wherein monomer, preferably an alpha olefin, more preferably ethylene, and optionally comonomer(s) are recycled from the reactor effluent, wherein the amount of volatiles, preferably methane, ethane, and hydrogen, is reduced in the recycle stream, and wherein the amount of monomer, preferably an alpha olefin, more preferably ethylene, and optionally comonomer(s) in the liquid feed stream and/or the recycle stream is increased.

It has now surprisingly found that above-mentioned objects can be achieved by a feeding device for preparing a feed stream for a solution polymerization, comprising a feed vessel, the feed vessel comprising a top zone and a bottom zone; a feed outlet for withdrawing the feed stream, wherein the feed outlet is fluidly connected with the bottom zone; a waste outlet for withdrawing a waste vapor stream, wherein the waste outlet is fluidly connected with the top zone; an absorber positioned below the top zone; a first inlet for introducing a fresh liquid stream into or on top of the absorber, wherein the first inlet is fluidly connected with the absorber; a first heat exchanger positioned upstream of the first inlet for cooling the fresh liquid stream prior to introducing the fresh liquid stream into or on top of the absorber; a second inlet for introducing a recycle liquid stream, wherein the second inlet is positioned below the first inlet; and a third inlet for introducing a recycle vapor stream, wherein the third inlet is positioned below the second inlet and above the feed outlet, wherein the feed vessel does not comprise a heat exchanger in the top zone.

It has been further surprisingly found out that above-mentioned objects can be achieved by a solution polymerization reactor assembly comprising the feeding device according to the present invention.

It has been further surprisingly found that above-mentioned objects can also be achieved by a process for preparing a feed stream for a solution polymerization, the feed stream comprising at least one solvent, a monomer and optional comonomer, the process comprising the steps of:
(i) providing at least one fresh liquid stream comprising the at least one solvent and optional comonomer;
(ii) cooling the at least one fresh liquid stream yielding a cooled fresh liquid stream to a temperature below 300 K;
(iii) providing at least one recycle liquid stream comprising the at least one solvent, the optional comonomer and the monomer, wherein the monomer preferably is a recycled monomer;
(iv) providing at least one vapor recycle stream comprising the monomer,
(v) combining a contacted fresh liquid stream with the at least one recycle liquid stream yielding a contacted recycle liquid stream;
(vi) contacting the at least one recycle vapor stream with the contacted recycle liquid stream yielding the feed stream and a contacted recycle vapor stream;
(vii) contacting the contacted recycle vapor stream with the at least one cooled fresh liquid stream yielding the contacted fresh liquid stream and a waste vapor stream;
(viii) withdrawing the waste vapor stream;
(ix) withdrawing the feed stream;
wherein the waste vapor stream is not further condensed prior to step (viii).

The present invention has the advantage that the ethylene solubility is improved much more effective then by cooling the vapors after steps (v) to (vi) as proposed in the prior art document EP 4 000 723 A1. Moreover, such a heat exchanger in the absorption column can even be omitted further simplifying the device and the process according to the invention.

### Short Description of the Figures

- Figure 1: shows a schematic drawing of the most general embodiment of the feeding device according to the present invention. It should be understood that the schematic drawing does not reflect the actual dimensions of the feeding device. The same holds for the remaining Figures.
- Figure 2: shows a schematic drawing of a feeding device according to the present invention showing preferred embodiments in view of the introduction of the recycle liquid stream into the feed vessel. Thereby an embodiment (Fig. 2a) involving an inlet suitable for spraying, another embodiment (Fig. 2b) involving gas and liquid distributors, a third embodiment (Fig. 2c), in which the second inlet is fluidly connected with the absorber, and a fourth embodiment including two absorbers (Fig. 2d), are shown.
- Figure 3: shows a schematic drawing of an embodiment of a feeding device according to the present invention according to Figure 2, wherein the embodiments of Fig. 2a and Fig. 2b are combined.
- Figure 4: shows a schematic drawing of the feeding device according to the present invention showing preferred embodiments in view of the introduction of the recycle vapor stream into the feed vessel. Thereby an embodiment (Fig. 4a) involving a dosing pipe, an embodiment (Fig. 4b) involving a gas distributor are shown, and another embodiment (Fig. 4c) combining the features of the embodiments according to Figures 4a and 4b are shown.
- Figure 5: shows a schematic drawing of a most preferred embodiment of a feeding device according to the present invention combining the features of the embodiments shown in Figures 2a and 4c.
- Figure 6: shows a schematic drawing of a preferred embodiment comprising a recycle arrangement for the waste vapor stream. It should be understood that the recycle arrangement can be applied to all embodiments described herein. Hence, the remaining configuration apart from the recycle arrangement as shown in Figure 6 is an exemplary configuration.
- Figure 7: shows a schematic drawing of a preferred embodiment comprising a by-pass arrangement for the recycle vapor stream. Also in this case, it should be understood that the by-pass arrangement can be applied to all embodiments described herein. Hence, the remaining configuration apart from the recycle arrangement as shown in Figure 7 is an exemplary configuration.
- Figure 8: shows a schematic drawing of a possible configuration with a polymerization reactor including the feeding device of the current invention for indication on the position of the feed vessel in the total reactor feed system.
- Figure 9: shows a schematic drawing of the most general embodiment of the process of the invention using the feeding device according to Figure 6.

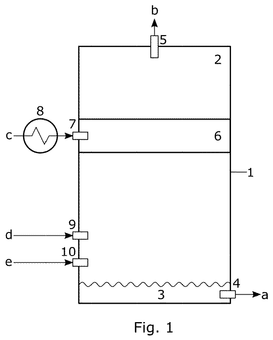

### Reference list (Figures 1-9 only)

- **1**: feed vessel
- **2**: top zone
- **3**: bottom zone
- **4**: feed outlet
- **5**: waste outlet
- **6**: absorber
- **6a**: second absorber
- **7**: first inlet
- **7'**: fourth inlet
- **8**: first heat exchanger
- **9**: second inlet
- **10**: third inlet
- **11**: first distributor
- **12**: second distributor
- **13**: dosing pipe
- **14**: third distributor
- **15**: purge condenser
- **16**: pump
- **17**: polymerization reactor
- **18**: fifth inlet
- **19**: second heat exchanger
- **20**: sixth inlet
- **21**: seventh inlet
- **a**: feed stream
- **b**: waste vapor stream
- **b'**: vapor purge stream
- **b"**: waste recycle stream
- **c**: fresh liquid stream
- **c1**: cooled fresh liquid stream
- **c2**: contacted fresh liquid stream
- **d**: recycle liquid stream
- **d1**: contacted recycle liquid stream
- **e**: recycle vapor stream
- **e1**: contacted recycle vapor stream
- **f**: original recycle vapor stream
- **g**: branched recycle vapor stream
- **h**: comonomer stream
- **i**: monomer stream
- **j**: hydrogen stream

### Definitions

The term *'volatile components'* as used herein denotes components preferably found in liquid and vapor recycle streams as provided by the recycling sections of solution polymerization processes. Such streams comprise components, which can evaporate from such liquid streams upon release of pressure or increase of temperature of said streams. Such volatile components can be inert gases such as nitrogen, unreacted light monomers such as ethylene or propylene, optionally unreacted comonomers such as butene-1, lower hydrocarbons such as methane, ethane, propane or butane, generally volatile inert components provided by side reactions in the polymerization process as well as hydrogen.

The term '*fresh liquid'* as used herein denotes a liquid used in the feed stream having no amounts of volatile components at ambient conditions, i.e. 1 atm pressure and 20 °C.

The term *'recycle liquid'* as used herein denotes a liquid used in the feed stream having an amount of volatile components at ambient conditions, i.e. 1 atm pressure and 20 °C.

The term *'recycle vapor'* as used herein denotes a gaseous composition comprising an amount of volatile components.

The term '*reactants*' as used herein denotes monomers, such as ethylene or propylene, but further also includes optional comonomer(s).

The term *'absorber'* as used herein denotes a device, which is suitable to intensify contact between liquid and vapor phases. Preferably, the absorber comprises one or more unit(s), wherein a unit consists of a liquid distributor on top followed by a section of random packing, preferably ceramic packing, polymer packing, structured packing, trays, or random metal packing, such as Intalox metal packing or Raschig rings, and a gas distributor at the bottom. Preferably, liquid streams to be processed are introduced in the liquid distributor and vapor streams to be processed are introduced below or via the gas distributor.

It should be further understood that the terms *'below'* and *'above'* as used herein for the description of the constitution of the feeding device are used with reference to the gravitational force and therefore the height of the feeding device.

The term '*spraying*' as used herein has to be understood as a process step, in which a condensed phase is introduced into a gaseous phase. Thereby the condensed phase is split up in multiple droplets. This is usually done by at least one nozzle. Spraying has to be understood as a process step in which a two-phase system is formed (gaseous/condensed) having a phase separating surface as high as possible.

The term *'distributor'* as used herein denotes a device, which is able to distribute, i.e. finely disperse, liquid and/or gas in case the liquid and/or gas passes the distributor. Preferably, the distributor is a distribution plate, distributing liquids downwards and vapors upwards. Preferably, for a packed bed, such as an absorber, a liquid distributor is used above the packed bed to evenly distribute the liquid over the packed bed. Below the packed bed a gas distributor is preferably used. As preferably a support grid is used for the packed bed, such a support grid can be preferably combined with the gas distributor.

The term '*distributing*' as used herein denotes the process step of finely dispersing, preferably finely dispersing a liquid and/or gas. Distributing can be achieved by leading the liquid and/or gas through a distributor or by spraying a liquid with a spraying device.

The term *'fluidly connected'* as used herein denotes a configuration in which two or more components, devices, or systems are arranged such that a fluid, such as a liquid, a gas, or a slurry, preferably a liquid, can flow or be transferred between them. This connection may include direct pathways like pipes, tubes, or channels, and may involve intervening elements such as valves, pumps, or filters, provided they do not obstruct the intended fluid communication. The term does not necessarily require a continuous or uninterrupted physical connection, but rather emphasizes the capability of fluid flow between the connected components.

*'Flash separators'* have been known in the prior art for decades (also as low- pressure separators). As it is well known in the art, a liquid feed is passed to a flash vessel operated at a reduced pressure. Thereby a part of the liquid phase vaporizes and can be withdrawn as an overhead stream (or a vapor stream) from the low-pressure separator. The part remaining in liquid phase is then withdrawn as a bottom stream or a liquid stream from the flash vessel. Operating the low-pressure separator under conditions such that both vapor and liquid phases are present in the flash vessel describes this situation.

### Detailed Description of the Invention

As indicated above, the present invention is concerned with a feeding device, a reactor assembly comprising the feeding device, and a process for preparing a feed stream for a solution polymerization, which will be explained in detail in the following.

### Feeding device and reactor assembly

The most general embodiment of the feeding device of the present invention is explained based on Figure 1. Hence, this embodiment represents a feeding device for preparing a feed stream **(a)** for a solution polymerization, comprising a feed vessel **(1),** the feed vessel **(1)** comprising:
- a top zone **(2)** and a bottom zone **(3);**
- a feed outlet **(4)** for withdrawing the feed stream **(a),** wherein the feed outlet **(4)** is fluidly connected with the bottom zone **(3);**
- a waste outlet **(5)** for withdrawing a waste vapor stream **(b),** wherein the waste outlet **(5)** is fluidly connected with the top zone **(2);**
- an absorber **(6)** positioned below the top zone **(2);**
- a first inlet **(7)** for introducing a fresh liquid stream **(c)** into or on top of the absorber **(6),** wherein the first inlet **(7)** is fluidly connected with the absorber **(6);**
- a first heat exchanger **(8)** positioned upstream of the first inlet **(7)** for cooling the fresh liquid stream **(c)** prior to introducing the fresh liquid stream **(c)** into or on top of the absorber **(6);**
- a second inlet **(9)** for introducing a recycle liquid stream **(d),** wherein the second inlet **(9)** is positioned below the first inlet **(7);** and
- a third inlet **(10)** for introducing a recycle vapor stream **(e),** wherein the third inlet **(10)** is positioned below the second inlet **(9)** and above the feed outlet **(4),**
wherein the feed vessel **(1)** does not comprise a heat exchanger in the top zone **(2).**

Preferably, the top zone defines the zone, preferably the flow path, between the absorber **(6)** and the waste outlet **(5).** Hence, preferably, the absorber **(6)** divides the feed vessel **(1)** into the top zone **(2)** and the bottom zone **(3).** Thus, the absorber **(6)** is preferably positioned below the top zone **(2)** and above the bottom zone **(3).** Further preferably, the feed vessel **(1)** does not comprise a heat exchanger in the flow path between the absorber **(6)** and the waste outlet **(5).**

Hence, the feeding device of the present invention comprises a first heat exchanger fluidly connected with the fresh liquid stream **(c)** upstream to the first inlet **(7)** with respect to the flow direction of the fresh liquid stream **(c).** This heat exchanger is used to cool down the fresh liquid stream **(c)** before entering the absorber **(6).** Thus, less volatile reactants are taken with the waste vapor stream **(b)** and vented off. It could be shown in the examples, that a feeding device according to the present invention more efficiently recycles unreacted monomer to the reactor while maintaining the purge rates of unwanted volatiles such as hydrogen, methane, and ethane. To enhance the efficiency, the feeding device **(1)** does not comprise a heat exchanger in the top zone **(2),** preferably does not comprise a heat exchanger in the flow path between the absorber **(6)** and the waste outlet **(5).** Thus, the feeding device **(1)** is devoid of a heat exchanger in the top zone **(2).** Particularly, the feeding device **(1)** is devoid of a heat exchanger in the flow path between the absorber **(6)** and the waste outlet **(5).**

Preferably, the feeding device **(1)** of the present invention furthermore comprises a storage vessel for storing the feed stream **(a)** positioned downstream of the feed outlet **(4).** The storage vessel has the advantage that it can be ensured that the feed stream **(a)** is not running empty, and the polymerization reactor is constantly and reliably supplemented with feed stream.

Preferably, the absorber **(6)** is a packed-bed absorber.

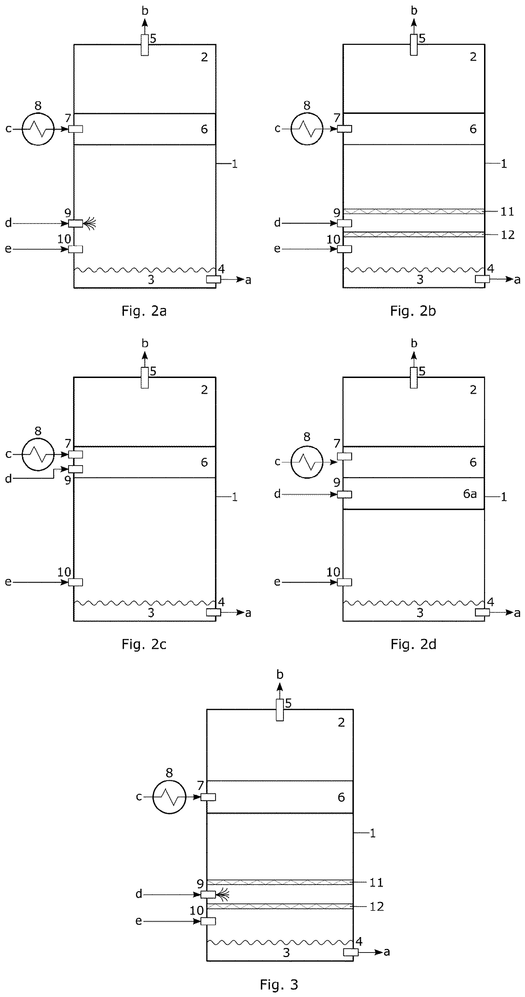

Furthermore, in a preferred, alternative embodiment of the invention according to Fig. 2a, the second inlet **(9)** further comprises a spraying device configured to spray the recycle liquid stream **(d)** into the feed vessel **(1).** The effect of the spraying by the spraying device is that a gaseous/liquid phase system with a very high phase separating surface is formed in a short period of time, whereby the liquid part of the system is the recycle liquid stream **(d).** As a subsequent effect of the formation of said system, volatile components comprised in the liquid recycle stream **(d)** are set free and travel towards the top zone **(2)** of the feed vessel **(1).** Furthermore, as another subsequent effect, the condensed part of the recycle liquid stream **(d)** is finely dispersed and travels down towards the bottom zone **(3)** of the feed vessel **(1).** The fine dispersion makes the liquid more absorptive in view of volatile components comprised in the recycle vapor stream **(e)** travelling counter currently up from the third inlet **(10)** to the top zone **(2)** of the feed vessel **(1).**

In a further preferred embodiment of the invention according to Fig. 2b, the feed vessel **(1)** comprises a second distributor **(12)** positioned below the second inlet **(9)** and above the third inlet **(10).** This equally ensures that a liquid shower of the liquid comprised in the recycle liquid stream **(d)** is created, leading to the liquid of the recycle liquid stream **(d)** falling down in the feed vessel **(1)** in a highly distributed manner. As a result, at least parts of the volatile components in the liquid recycle stream **(d)** are set free, traveling along the stream direction towards the top zone **(2)** of the feed vessel **(1).** These volatile components can comprise hydrogen, inert gases, volatile inert components, and also volatile reactants. Furthermore, the feeding device is configured to ensure that the volatile components released from the recycle liquid stream **(d)** travel through the absorber **(6).** In said preferred embodiment according to Fig. 2b, the feed vessel **(1)** can also comprise a first distributor **(11)** positioned above the second inlet **(9)** and below the absorber **(6).** Such a setup ensures that the gases evaporating from said liquid shower as well as the gases of the recycle vapor stream **(e)** traveling upwards the top zone **(2)** are disturbed to create maximum contact with the downwards traveling liquids of the fresh liquid stream **(c).** This further has the advantage that the conditions can be adjusted so that only specific components such as reactants are dissolved, in the fresh solvent of the fresh liquid stream **(c)** and/or the liquid of the recycle liquid stream **(d).** Generally, the pressure and temperature are chosen to allow the removal of volatile compounds. However, the position of the feeding locations for the fresh and recycled streams maximizes the absorption of relatively heavy components.

Even more preferably, the features of these two preferred embodiments can be combined, i.e. the spraying device of the second inlet **(9)** with the first distributor **(11)** and the second distributor **(12)** as depicted in Figure 3. Most preferably, a packing can be added below the second distributor or above the second distributor and below the second inlet **(9).** This combination with the packing forms an absorber. Such an embodiment is depicted in Figure 2d. Furthermore, the two-absorbers could be even more integrated, in that the absorber **(6)** is enclosed by two liquid distributors and the second absorber **(6a)** is enclosed by the lower liquid distributor of the absorber **(6)** and a gas distributor.

The fresh liquid stream **(c)** is introduced at the absorber **(6),** preferably directly into or on top of the absorber **(6).** Thus, the fresh liquid of the fresh liquid stream **(c)** and the volatile components evaporating from the recycle liquid stream **(d)** as well as from the recycle vapor stream **(e)** are contacted in the absorber **(6).** This has the advantage that the contacting is maximized in the absorber **(6)** and the conditions in the absorber **(6)** can be adjusted so that only specific components such as reactants are dissolved, in the fresh liquid of the fresh liquid stream **(c).** By maximizing the contacting between the volatile components and the fresh liquid such an adjustment can be found more easily.

Therefore, in the preferred embodiments according to Fig. 2a and Fig. 2b, the position of the second inlet **(9)** is below the absorber **(6)** and above the third inlet **(10).** However, in another preferred alternative embodiment of the present invention according to Figure 2c, the second inlet **(9)** is fluidly connected with the absorber **(6)** and even more preferably at the absorber **(6)** and below the first inlet **(7).** Hence, in such a preferred embodiment, contacting with the fresh liquid of the fresh liquid stream **(c)** occurs completely within the absorber. Respectively, the gaseous stream and the liquid stream leaving the absorber at the top and the bottom, respectively, are again finely distributed by the gas distributor and the liquid distributor as comprised in the absorber **(6).**

It should be understood that preferably the recycle liquid stream is withdrawn from a recycling section of a polymerization process, more preferably from the recycle section of the polymerization process the feed stream is fed to. Such a recycle section of a solution polymerization process typically consists of one or more flash separators separating the mixture withdrawn from the reactor in one or more polymer-rich liquid stream(s) and one or more polymer-lean vapor stream(s) commonly comprising unreacted reactants, solvent, inert gases and volatile inert components. The vapor streams are preferably again separated, preferably partially condensed, into at least one liquid stream and at least one vapor stream. Hence, the recycle section provides at least one recycle liquid stream, which is introduced into the feeding device of the present invention as disclosed above, and a recycle vapor stream. However, this stream still may contain unreacted reactants, which could be recycled into the polymerization process.

Therefore, the feeding device of the present invention further comprises a third inlet **(10)** for introducing the recycle vapor stream **(e)** positioned below the second inlet **(9)** and above the feed outlet **(4).** In such a way, the volatile components of the recycle vapor stream **(e)** travel upwards to the top zone **(2)** thereby passing and contacting the liquid components of the fresh liquid stream (c) and the recycle liquid stream **(d).** This allows selective dissolution of reactants from the recycle vapor stream **(e)** and reintroduction into the feed stream **(a).**

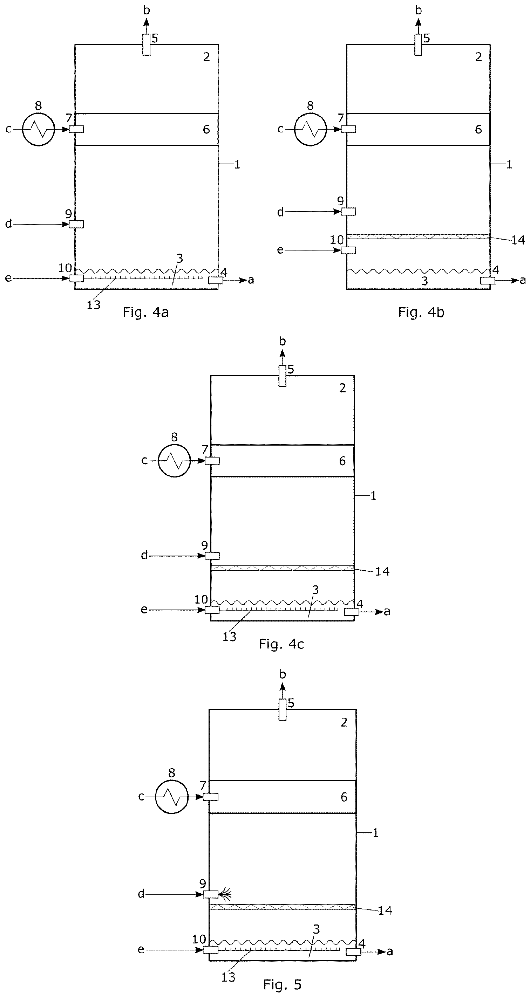

In a preferred embodiment according to Figure 4a, the third inlet **(10)** is fluidly connected with the bottom zone **(3)** and comprises a dosing pipe **(13)** extending into the bottom zone **(3)** of the feed vessel **(1).** Most preferably, such a dosing pipe can be a distribution pipe, preferably a straight pipe having a length of the diameter of the feeding vessel **(1)** or a ring pipe having a diameter smaller than the diameter of the feed vessel **(1),** with holes therein, preferably with holes at the surface facing away from the absorber **(6),** preferably to the opposite direction of the absorber **(6).** It should be understood that the bottom zone **(3)** is configured to hold the liquid phase of the feed stream **(a).** This is indicated in the Figures by the waved line. Hence, in the preferred embodiment of Figure 4a, the dosing pipe is configured to extend within the liquid phase **(3)** of the feed stream **(a).** Therefore, the recycle vapor stream **(e)** passing the dosing pipe is not only finely dispersed and disturbed, but also is forced to travel through the liquid in the bottom zone. This has the effect that volatile components, which are easily soluble in the liquid, such as reactants, are dissolved in the feed stream liquid in the first place due to the significantly enhanced liquid/gas surface area. Furthermore, this embodiment has the advantage that the recycle vapor stream **(e)** is disturbed and, hence, the contacting with the recycle liquid stream **(d)** is also improved. The advantage of contacting the recycle vapor stream **(e)** with the recycle liquid stream **(d)** is that reactants in the recycle vapor stream **(e)** might already be dissolved in the recycle liquid stream **(d).** As the vapor of the recycle vapors stream **(e)** follows the same passageway as the volatile components evaporating from the recycle liquid stream **(d),** they also are led into or on top of the absorber **(6).** Therefore, the general advantages of leading the recycle vapor stream **(e)** into the feeding vessel **(1)** is analogously to the advantage of leading the evaporated volatile components of the recycle liquid stream **(d)** through the absorber **(6)** provided with a fresh liquid stream **(c)** as the contacting between the recycle vapor stream **(e)** and the fresh liquid stream **(c)** is maximized within the absorber **(6),** the conditions in the absorber **(6)** can be adjusted so that only specific components such as reactants are dissolved, in the fresh solvent and optional comonomer of the fresh liquid stream **(c).** Furthermore, another general advantage is that such a setup enables both the recycling of reactants from the recycle liquid stream **(d),** but also from the recycle vapor stream **(e).**

In another preferred embodiment of the feeding device of the present invention according to Figure 4b the feed vessel **(1)** comprises a third distributor **(14)** positioned above the third inlet **(10)** and below the second inlet **(9).** This measure ensures that the recycle vapor stream **(e)** is distributed and the contacting of the recycle vapor stream **(e)** and the liquids from the fresh liquid stream **(c)** and the recycle liquid stream **(d)** improved.

Preferably, the features of the embodiments according to Figure 4a and 4b can be combined as shown in the embodiment according to Figure 4c. The therein shown feeding device comprises a dosing pipe **(13)** and a third distributor **(14),** thereby achieving good dissolution as well as even distribution. It should be understood that the embodiment of Figure 4c could also be implemented without a dosing pipe **(13),** but in a way that the feed vessel **(1)** is run so that the third inlet **(10)** is below the level of the liquid phase **(3)** of the feed stream **(a).** Alternatively, as shown in Figure 5, the distribution can also be achieved by spraying.

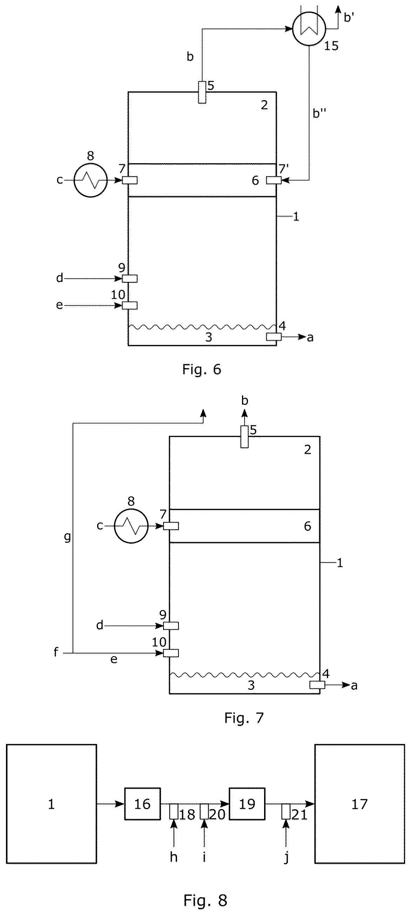

In another preferred embodiment according to Figure 6, the feed vessel **(1)** further comprises a purge condenser **(15),** wherein the purge condenser is configured to receive the vapor waste stream **(b)** and to produce a vapor purge stream **(b')** and a liquid waste recycle stream **(b"),** and wherein the feed vessel **(1)** further comprises a fourth inlet **(7'),** wherein the fourth inlet **(7')** is fluidly connected with the absorber **(6),** and wherein the fourth inlet **(7')** is configured to receive the liquid waste recycle stream **(b").** In an alternative embodiment, the liquid waste recycle stream **(b")** is received by the first inlet **(7).** It should be understood that the remaining configuration as depicted in Figure 6 is an exemplary configuration and refers to the most general embodiment according to Figure 1. However, the recycle arrangement as shown in Figure 6 can be applied in all embodiments disclosed herein, such as Figures 2a, 2b, 2c, 2d, Figure 3, Figures 4a, 4b, 4c, Figure 5, and Figure 7. The advantage of the feed vessel according to Figure 6 is that more of reactants, such as monomer or comonomer, and solvent can be recycled from the waste vapor stream **(b)** further increasing the efficiency of the process.

In another preferred embodiment according to Figure 7, the feed vessel **(1)** further comprises a branching, wherein the branching is positioned in the recycle vapor stream **(e)** upstream of the third inlet **(10),** wherein the branching is further connected to a branched recycled vapor stream **(g).** The branched recycled vapor stream **(g)** may join the waste vapor stream **(b)** downstream of the waste outlet **(5).** It should be understood that the remaining configuration as depicted in Figure 7 is an exemplary configuration and refers to the most general embodiment according to Figure 1. However, the branched recycle arrangement as shown in Figure 7 can be applied in all embodiments disclosed herein, such as Figures 2a, 2b, 2c, 2d, Figure 3, Figures 4a, 4b, 4c, Figure 5, and Figure 6. The advantage of the feed vessel according to Figure 7 is that in particular impurities, such as volatiles, which tend to accumulate in the solvent due to very good solubility, can be efficiently removed by branched recycled vapor stream **(g)** so that they will not accumulate.

Preferably, the feeding device of the present invention comprises further means for preparing the feed stream **(a).** Generally, apart from the recycling aspect, the feed stream **(a)** might have to be enriched in certain reactants and also hydrogen, where necessary. Furthermore, the conditions of the stream might have to be adjusted before entering the polymerization reactor. Therefore, as depicted in Figure 8, the feeding device of the present invention preferably further comprises a pump **(16)** positioned downstream of the feed outlet **(4)** of the feed vessel **(1)** with reference to the flow direction of the feed stream **(a).** Such a pump ensures that the pressure of the feed stream can be adjusted to the pressure the polymerization reactor **(17;** not part of the feeding device) is operated at.

Furthermore, the feeding device of the present invention preferably further comprises at least one fifth inlet **(18)** for introducing at least one comonomer stream **(h)** into the feed stream **(a),** whereas the at least one fifth inlet **(18)** is positioned downstream of the feed outlet **(4)** with reference to the flow direction of the feed stream **(c),** preferably downstream of the pump **(16).** It has been found out that the comonomer can also be dosed as part of the fresh liquid stream **(c).** This is especially preferable if the comonomer has a boiling point equal or higher as the solvent in use.

Preferably, the feeding device of the present invention further comprises at least one second heat exchanger **(19)** positioned downstream of the feed outlet **(4)** with reference to the flow direction of the feed stream **(a).** Preferably, the pump **(16)** is positioned upstream of the at least one second heat exchanger **(19)** with reference to the flow direction of the feed stream **(a).**

Also preferably, the feeding device of the present invention further comprises at least one sixth inlet **(20)** for introducing the monomer, preferably ethylene or propylene via stream **(i),** into the feed stream **(a)** positioned downstream of the feed outlet **(4)** with reference to the flow direction of the feed stream **(a).** Preferably, the sixth inlet **(20)** is positioned downstream of the pump **(16)** and upstream of the at least one second heat exchanger **(19)** with reference to the flow direction of the feed stream **(a).**

Further preferably, the feeding device of the present invention further comprises at least one seventh inlet **(21)** for introducing hydrogen via stream **+(j)** into the feed stream **(a),** the seventh inlet **(21)** being preferably positioned downstream of the at least second heat exchanger **(19)** with reference to the flow direction of the feed stream **(a).**

Hence, the present invention is also concerned with a solution polymerization reactor assembly comprising a feeding device as described herein.

### General process of the invention

Generally, the feeding process of the present invention is connected to a solution polymerization process. First of all, the feeding process provides the feed stream for a solution polymerization process. Second, preferably, the feeding process is used to recycle streams (liquid and also vapor streams) withdrawn from a solution polymerization process. Even more preferably, these two solution polymerization processes (i.e. the one the feed stream is fed to and the one the recycle streams are taken from) are one identical solution polymerization process. Therefore, the solution polymerization process should be described in the following.

### Solution polymerization process

Preferably, the present invention is applicable for supercritical, solution and advanced solution polymerization processes. More preferably are continuous supercritical, solution and advanced solution polymerization processes. Most preferably, the production process comprises a continuous solution polymerization process.

The polymer produced in the present invention can be any polymer, for the production of which volatile compounds are used. Preferably, the polymer produced in the present invention is an olefin homo- or copolymer. More preferably, the monomer of this polymer is selected from an α-olefin having a carbon atom number of 2 to 4, preferably ethylene, propylene, 1-butene, most preferably from ethylene. Most preferably, the polymer is a polyethylene copolymer or homopolymer.

In case the polymer is a copolymer, the comonomer preferably is different from the α-olefin monomer and is selected from the group consisting of linear and cyclic olefins and α-olefins having from 2 to 12 carbon atoms and mixtures thereof. More preferably, the comonomer is an α-olefin different from the olefin monomer and is selected from the group consisting of linear olefins having from 2 to 12 carbon atoms and mixtures thereof, preferably 4 to 10 carbon atoms, most preferably 1-butene and 1-octene.

In a most preferred embodiment, the polymer is produced in a solution polymerization process as disclosed in the following.

The polymerization is typically conducted in the presence of an olefin polymerization catalyst. The olefin polymerization catalyst may be any catalyst known in the art, which is capable of polymerizing the monomer and the optional comonomer. Thus, the polymerization catalyst may be a Ziegler-Natta catalyst as disclosed in EP-A-280352, EP-A-280353 and EP-A-286148, or it may be a metallocene catalyst as disclosed in WO-A-1993025590, US-A-5001205, WO-A-1987003604 and US-A-5001244, or it may be a combination of these. Other suitable catalysts, such as late transition metal catalysts, can also be used.

In a solution polymerization process a solvent is also present. The solvent is in liquid or supercritical state in the polymerization conditions. The solvent is typically and preferably a hydrocarbon solvent. The liquid hydrocarbon solvent used is preferably a C₅₋₁₂-hydrocarbon, which may be unsubstituted or substituted by C₁₋₄ alkyl group such as pentane, methyl pentane, dimethyl butane, hexane, heptane, methyl hexane octane, cyclohexane, methylcyclohexane, methylcyclopentane and hydrogenated naphtha. More preferably, substituted or unsubstituted C₆-₁₀-hydrocarbon solvents are used, even more preferably substituted or unsubstituted C₅-₇-hydrocarbon solvents, and most preferably a mixture of substituted and unsubstituted C₆-hydrocarbon.

Other components may also be added into the reactor. It is known to feed hydrogen into the reactor for controlling the molecular weight of the polymer formed during the polymerization. In addition, different kinds of activity boosters or activity retarders may be used for controlling the activity of the catalyst.

Typically, the content of the polymer in the stream withdrawn from the polymerization reactor comprising the solvent, the polymer and the unreacted monomer and optionally comonomer is from 10 to 35 wt%, preferably from 12.5 to 30 wt%, more preferably from 15 to 25 wt%.

Also typically, the stream withdrawn from the reactor is fed to the separation section downstream, to an amount of more than 20% of the total stream withdrawn from the reactor, preferably more than 40% and most preferably more than 60%. Hence, most preferably 100% of the stream withdrawn from the reactor is fed to the separation section downstream.

Said stream is fed to a separation section. In such a section the polymer comprising stream is usually split into a polymer-rich condensed phase and a polymer-lean vapor phase with the help of one or more flash separators. The vapor phase comprising volatile reactants, inert gases, hydrogen and volatile inert components is subsequently separated, preferably partly condensed, into a recycle liquid stream and a recycle vapor stream. At least this recycle liquid stream and also at least the recycle vapor stream are fed to the feeding process according to the present invention and as described in the following. Typically, in the separation section comprises at least a part of the recycle liquid stream is separated, i.e. preferably partly condensed, more than once, whereas the resulting liquid and vapor streams can be recycled accordingly to the feeding process.

### Process for preparing a feed stream for a solution polymerization

The present invention further provides a process for preparing a feed stream for a solution polymerization, the feed stream **(a)** comprising at least one solvent, a monomer and optional one comonomer, the process comprising the steps of:
(i) providing at least one fresh liquid stream **(c)** comprising the at least one solvent and optional comonomer
(ii) cooling the at least one fresh liquid stream **(c)** yielding a cooled fresh liquid stream (c1) to a temperature below 300 K;
(iii) providing at least one recycle liquid stream **(d)** comprising the at least one solvent, the optional comonomer and the monomer, wherein the monomer preferably is a recycled monomer;
(iv) providing at least one vapor recycle stream **(e)** comprising the monomer, wherein the monomer preferably is a recycled monomer;
(v) combining a contacted fresh liquid stream **(c2)** with the at least one recycle liquid stream **(d)** yielding a contacted recycle liquid stream **(d1);**
(vi) contacting the at least one recycle vapor stream **(e)** with the contacted recycle liquid stream **(d1)** yielding the feed stream **(a)** and a contacted recycle vapor stream **(e1);**
(vii) contacting the contacted recycle vapor stream **(e1)** with the at least one cooled fresh liquid stream **(c1)** yielding the contacted fresh liquid stream **(c2)** and a waste vapor stream **(b);**
(viii) withdrawing the waste vapor stream **(b);**
(ix) withdrawing the feed stream **(a);**
wherein the waste vapor stream **(b)** is not further condensed prior to step (viii).

The herein described feeding device in accordance with the invention may be used for implementing the above disclosed process for preparing a feed stream for a solution polymerization.

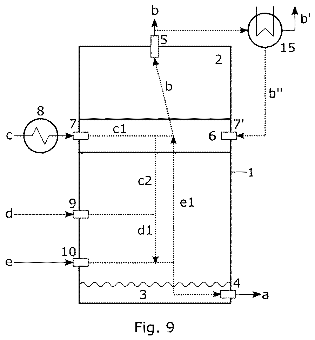

Reference is made to Figure 9, which schematically depicts the steps of the process according to the present invention.

As described for the feeding device beforehand, the step of cooling the fresh liquid stream **(c)** before contacting step (vii) has the surprising effect that unwanted volatile components of the recycle liquid stream **(d)** such as inert gases, hydrogen or volatile inert components, can be removed from said stream and vented off, while increased wanted volatile components of the recycle liquid stream **(d)** such as reactants, preferably monomer and optionally comonomer, more preferably ethylene, can be combined again in the feed stream **(a)** enabling recovering such wanted components into the polymerization process without having the disadvantages of not being able to control the amount of inert gases, hydrogen and/or volatile inert components in the process.

To enhance the efficiency of the process, the waste vapor stream **(b)** is not further condensed prior to step (viii). Even more preferably the waste vapor stream **(b)** is additionally heated and kept at a temperature above the condensation point of the composition of waste vapor stream **(b)** prior to step (viii), preferably is even superheated. This ensures that waste vapor stream **(b)** is not condensed during the process reducing the risk of condensed material downstream of the feeding process.

In a preferred embodiment of the process according to the present invention the process comprises a condensed phase **(3)** and wherein in step (iv) the at least one vapor recycle stream **(e)** is provided by introduction into the condensed phase **(3).** This ensures that the vapor recycle stream **(e)** has to pass through the liquid phase **(3)** before step (v), which results in dissolution of higher weight volatiles, such as monomer or optionally comonomer, more preferably ethylene, in the liquid phase **(3).**

Preferably, the fresh liquid stream **(c)** in step (ii) is cooled to a temperature below 295 K, preferably below 290 K, and most preferably below 285 K.

Generally, the process can comprise combinations of steps (v) to (vii), as in boundary situations different process steps are conceivable. Hence, in the process according to the present invention, step (v) may be carried out within step (vii) so that the contacted fresh liquid stream **(c2)** is also contacted with the contacted recycle vapor stream **(e1).**

To ensure best evaporation of volatile components from the recycle liquid stream, the process further comprises the step of:
(x) distributing the recycle liquid stream **(d)** before step (v).

The process of the present invention further comprises the steps of providing a vapor recycle stream **(e).** This vapor recycle stream **(e)** flows counter currently to the cooled fresh liquid stream **(c1)** and the recycle liquid stream **(d).** This contacting of the recycle vapor stream with the cooled fresh liquid stream **(c1)** and the recycle liquid stream **(d)** has the surprising effect that unwanted volatile components of the recycle vapor stream **(e)** such as inert gases, hydrogen or volatile inert components, can still be removed from said stream and vented off at maintained levels, while wanted volatile components of the recycle vapor stream **(e)** such as reactants can be combined again in the feed stream **(a)** in increased levels enabling recovering such wanted components into the polymerization process at higher efficiency without having the disadvantages of not being able to control the amount of inert gases, hydrogen and/or volatile inert components in the process. This is in particular achieved without cooling the fresh liquid stream **(c)** towards the cooled fresh liquid stream **(c1)** after step (iii) or during ineffective contacting in steps (v) to (vii).

Even more preferably, the process further comprises the step of:
(xi) distributing the recycle vapor stream (e) before step (vi).

Hence, preferably, the vapor recycle stream (e) is further distributed before contacting with the cooled fresh liquid stream **(c1)** and/or the recycle liquid stream **(d)** preferably using a dosing pipe or a gas distributor. Alternatively, preferably, the recycle vapour stream **(e)** is brought into contact with liquid in the bottom zone. This is preferably achieved by a dosing pipe **(13)** extending into the liquid in the bottom zone of the feeding device as explained earlier. As also already explained in the section regarding the feeding device, such a distribution has the advantage that also more wanted volatile components from a recycle vapour stream **(e)** such as unreacted reactants can be brought in contact with the bottom liquid **(3)** and the cooled fresh liquid stream **(c1)** allowing for selective dissolution of wanted volatile components such as unreacted reactants and recycling thereof into the feed stream **(a).**

In another preferred embodiment of the present invention, the process further comprises the step of
(xii) intermediately storing the feed stream **(a)** in a storage vessel after step (viii).

Such a configuration ensures that the feed stream is buffered, and the polymerization reactor is constantly and reliably supplemented with feed stream.

In another preferred embodiment of the invention, the process further comprising the step of
(xiii) at least partially condensing the vapor waste stream **(b)** using a purge condenser **(15)** subsequent to the withdrawal of the vapor waste stream **(b)** in step (viii) thereby yielding vapor purge stream **(b')** and a waste recycle stream **(b"),** and contacting the waste recycle stream **(b")** with the at least one cooled fresh liquid stream **(c1)** in step (vii).

This further enhances the separation efficiency in view of wanted volatiles such as monomer or optionally comonomer, preferably ethylene.

The process may further comprise the step of
(xiv) branching off a part of an original recycle vapor stream **(f)** prior to steps (v) and (vi) yielding a branched recycle vapor stream **(g)** and the recycle vapor stream **(e).**

Preferably, in step (xiv), the weight of the branched recycle vapor stream **(g)** is between 0.5 and 5 wt% of the weight of the original recycle vapor stream (f)).

In the process of the present invention, the feed stream **(a)** is preferably further processed before being fed to the polymerization reactor. Hence, preferably the feed stream is compressed to a pressure in the range of 50 to 300 barg before entering the polymerization reactor. Furthermore, also preferably, the feed stream is cooled down to a temperature in the range of -50 to +50 °C before entering the polymerization reactor.

Finally, in preferred embodiments, the feed stream can be further modified by introducing at least one monomer into the feed stream **(a),** introducing optionally at least one comonomer into the feed stream **(a)** and/or introducing hydrogen into the feed stream **(a).**

Preferably, the process for preparing a feed stream for a solution polymerization of the present invention is carried out in the range of 2 to 20 barg pressure.

### Examples

The following examples are computer simulations carried out using the Aspen HYSYS V14 computer software.

### Comparative Example CE1

Comparative Example CE1 has been calculated using a reactor assembly setup according to EP 4 000 723 A1 (e.g. Fig 2c). The following assumptions were made for the process: the ethylene feed contains 0.045 mol-% ethane and 0.01 mol-% methane. Moreover, the 1-octene feed contains 3 mol-% iso-octenes. For the production of a 1-octene based copolymer 220 kg/h of ethylene is recycled to the feeding vessel. Part of the ethylene is absorbed in the feed vessel and about 33 kg/h are vented from the process. The detailed values for CE1 can be retrieved from Table 1.

**Table 1: Process conditions and resulting stream compositions of Comparative Example CE1**

| Name | | **a** | **b** | **c** | **d** | **e** |
|---|---|---|---|---|---|---|
| vapor fraction | % | 0 | 100 | 0 | 0 | 100 |
| Temperature | °C | 47.2 | 10.0 | 43.0 | 43.0 | 54.0 |
| Pressure | kPa | 630 | 610 | 1000 | 1000 | 900 |
| Total mass flow | kg/h | 9472.0 | 37.3 | 1713.2 | 7494.4 | 301.6 |
| hydrogen | kg/h | 0.006 | **0.114** | 0.000 | 0.000 | 0.121 |
| methane | kg/h | 0.060 | **0.091** | 0.000 | 0.000 | 0.151 |
| ethylene | kg/h | 241.6 | 33.5 | 0.0 | 58.5 | 216.7 |
| ethane | kg/h | 28.2 | **1.7** | 0.0 | 8.2 | 21.7 |
| solvent | kg/h | 6207.0 | 1.7 | 484.6 | 5662.0 | 62.0 |
| 1-octene | kg/h | 1881.6 | 0.1 | 973.5 | 907.6 | 0.5 |
| iso-octene | kg/h | 1113.6 | 0.0 | 255.1 | 858.1 | 0.4 |

### Inventive Example IE1

Inventive Example IE1 has been calculated using a reactor assembly setup according to the invention Figure 2c/d. The following assumptions were made for the process: the ethylene feed contains 0.045 mol-% ethane and 0.01 mol-% methane. Moreover, the 1-octene feed contains 3 mol-% iso-octenes. For the production of the same 1-octene based copolymer as produced in CE1, still 220 kg/h of ethylene are recycled to the feeding vessel in IE1. However, now the ethylene is absorbed in a feed vessel operated according to the invention. As a result, only 15 kg/h ethylene are vented from the process. The detailed values for IE1 can be retrieved from Table 2.

**Table 2: Process conditions and resulting stream compositions of Inventive Example IE1**

| Name | | **a** | **b** | **c1** | **d** | **e** |
|---|---|---|---|---|---|---|
| vapor fraction | % | 0 | 100 | 0 | 0 | 100 |
| temperature | °C | 42.0 | 13.7 | 10.0 | 43.0 | 54.0 |
| pressure | kPa | 630 | 610 | 1000 | 1000 | 900 |
| mass flow | kg/h | 9492.1 | 17.2 | 1713.2 | 7494.4 | 301.6 |
| hydrogen | kg/h | 0.006 | **0.114** | 0.000 | 0.000 | 0.121 |
| methane | kg/h | 0.066 | **0.085** | 0.000 | 0.000 | 0.151 |
| ethylene | kg/h | 259.8 | 15.4 | 0.0 | 58.5 | 216.7 |
| ethane | kg/h | 29.2 | **0.68** | 0.0 | 8.2 | 21.7 |
| solvent | kg/h | 6207.7 | 0.9 | 484.6 | 5662.0 | 62.0 |
| 1-octene | kg/h | 1881.6 | 0.0 | 973.5 | 907.6 | 0.5 |
| iso-octenes | kg/h | 1113.6 | 0.0 | 255.1 | 858.1 | 0.4 |

IE1 shows a reduction of 54% in ethylene losses in the waste vapor stream b compared to CE1. The amount of hydrogen purged in both CE1 and IE1 is in both cases comparable at 114 g/h. However, it should be noted that the methane and ethane purge via waste vapor stream b is slightly lower in the IE1 in comparison to CE1.

### Inventive Example IE2a and IE2b

Inventive Examples IE2a and IE2b have been calculated using a reactor assembly setup according to Figure 7. The following assumptions were made for the process: the ethylene feed contains 0.045 mol-% ethane and 0.01 mol-% methane. Moreover, the 1-octene feed contains 3 mol-% iso-octenes. To overcome the low methane and ethane purges in IE1, an additional purge of 1.5 kg/h and respectively 5.0 kg/h is introduced in IE2a and IE2b. Table 3 shows the results of IE2a, and Table 4 shows the results of IE2b. The total ethylene losses are still 54% reduced in comparison to CE1, while hydrogen removal is still comparable at 114 g/h. However, the ethane purge is increased about 10% in comparison to IE1, while the methane purge is about the same for IE2a/IE2b and IE1.

By increasing the purge stream g a bit more to 5 kg/h (IE2a vs. IE2b), the ethane purge is increased with 30% compared to IE1 while the ethylene losses are still 54% less compared to CE1. The hydrogen removal is still 114 g/h.

**Table 3: Process conditions and resulting stream compositions of Inventive Example IE2a**

| Name | | **a** | **b** | **c1** | **d** | **e** | **g** | **b+g** |
|---|---|---|---|---|---|---|---|---|
| vapor fraction | % | 0 | 100 | 0 | 0 | 100 | 100 | 100 |
| temperature | °C | 42.0 | 13.6 | 10 | 43 | 54 | 54 | - |
| pressure | kPa | 630 | 610 | 1000 | 1000 | 900 | 900 | - |
| mass flow | kg/h | 9491.7 | 16.1 | 1713.2 | 7494.4 | 300.1 | **1.5** | 17.6 |
| hydrogen | kg/h | 0.006 | **0.114** | 0.000 | 0.000 | 0.120 | 0.001 | 0.114 |
| methane | kg/h | 0.066 | **0.084** | 0.000 | 0.000 | 0.150 | 0.001 | 0.085 |
| ethylene | kg/h | 259.8 | 14.3 | 0.0 | 58.5 | 215.7 | 1.1 | 15.4 |
| ethane | kg/h | 29.2 | **0.6** | 0.0 | 8.2 | 21.5 | 0.1 | 0.74 |
| solvent | kg/h | 6207.5 | 0.9 | 484.6 | 5662.0 | 61.7 | 0.3 | 1.2 |
| 1-octene | kg/h | 1881.6 | 0.0 | 973.5 | 907.6 | 0.5 | 0.0 | 0.0 |
| iso-octenes | kg/h | 1113.6 | 0.0 | 255.1 | 858.1 | 0.4 | - | - |

**Table 4 Process conditions and resulting stream compositions of Inventive Example IE2b**

| Name | | **a** | **b** | **c1** | **d** | **e** | **g** | **b+g** |
|---|---|---|---|---|---|---|---|---|
| vapor fraction | % | 0 | 100 | 0 | 0 | 100 | 100 | 100 |
| temperature | °C | 42.0 | 13.3 | 10 | 43 | 54 | 54 | |
| pressure | kPa | 630 | 610 | 1000 | 1000 | 900 | 900 | |
| mass flow | kg/h | 9490.8 | 13.5 | 1713.2 | 7494.4 | 296.6 | **5.0** | 18.5 |
| hydrogen | kg/h | 0.006 | 0.112 | 0.000 | 0.000 | 0.119 | 0.002 | 0.114 |
| methane | kg/h | 0.068 | 0.080 | 0.000 | 0.000 | 0.148 | 0.003 | 0.083 |
| ethylene | kg/h | 259.7 | 11.9 | 0.0 | 58.5 | 213.1 | 3.6 | 15.5 |
| ethane | kg/h | 29.0 | 0.5 | 0.0 | 8.2 | 21.3 | 0.4 | 0.89 |
| solvent | kg/h | 6206.9 | 0.8 | 484.6 | 5662.0 | 61.0 | 1.0 | 1.8 |
| 1-octene | kg/h | 1881.6 | 0.0 | 973.5 | 907.6 | 0.5 | 0.0 | 0.0 |
| iso-octene | kg/h | 1113.6 | 0.0 | 255.1 | 858.1 | 0.4 | 0.0 | 0.0 |

### Comparative Example CE2

Comparative Example CE2 has been calculated using a reactor assembly setup according to EP 4 000 723 A1 (e.g. Fig 2c). The following assumptions were made for the process: the ethylene feed contains 0.045 mol-% ethane and 0.01 mol-% methane. Moreover, the 1-butene feed contains 0.4 weight-% iso-butenes. For the production of a 1-butene based copolymer 250 kg/h of an ethylene stream are recycled into the feed vessel. About 87 wt.-% of the ethylene is absorbed in the solvent and 1-butene streams. The waste vapor stream (b) from the process comprises 33 kg/h ethylene. The detailed values for CE2 can be retrieved from Table 4.

**Table 4: Process conditions and resulting stream compositions of Comparative Example CE2**

| Name | | **a** | **b** | **c** | **d** | **e** |
|---|---|---|---|---|---|---|
| vapor fraction | % | 0 | 100 | 0 | 0 | 100 |
| temperature | °C | 45.7 | 5.0 | 40.0 | 40.0 | 55.8 |
| pressure | kPa | 630 | 610 | 1000 | 1000 | 1000 |
| mass flow | kg/h | 11238.18 | 39.7 | 985.7 | 9825.4 | 466.6 |
| hydrogen | kg/h | 0.007 | **0.128** | 0.000 | 0.005 | 0.131 |
| methane | kg/h | 0.096 | **0.124** | 0.000 | 0.005 | 0.215 |
| ethylene | kg/h | 305 | 33 | 2 | 87 | 248 |
| ethane | kg/h | 18 | **0.98** | 0.17 | 6 | 13 |
| solvent | kg/h | 9853 | 1.4 | 944 | 8852 | 59 |
| 1-butene | kg/h | 649 | 2.5 | 25 | 543 | 84 |
| iso-butenes | kg/h | 413 | 1.9 | 15 | 337 | 62 |

### Inventive Example IE3

Inventive Example IE2 has been calculated using a reactor assembly setup according to Figure 2c/d. The following assumptions were made for the process: the ethylene feed contains 0.045 mol-% ethane and 0.01 mol-% methane. Moreover, the 1-butene feed contains 0.4 weight-% iso-butenes. For the production of the same 1-butene based copolymer as produced in CE2 still 250 kg/h of ethylene is recycled into the feed vessel. However, now the ethylene is absorbed into the feed stream according to the invention. Thus, the ethylene recovery is increased to about 92%. The waste vapor stream (b) from the feed vessel comprising hydrogen and volatiles like methane and ethane now comprises 20 kg/h ethylene. The detailed values for IE3 can be retrieved from Table 5.

**Table 5: Process conditions and resulting stream compositions of Inventive Example IE3**

| Name | | **a** | **b** | **c1** | **d** | **e** |
|---|---|---|---|---|---|---|
| vapor fraction | % | 0 | 100 | 0 | 0 | 100 |
| temperature | °C | 43.5 | 15.4 | 9.0 | 40.0 | 55.8 |
| pressure | kPa | 630 | 610 | 1000 | 1000 | 1000 |
| mass flow | kg/h | 11253.48 | 24.3 | 985.7 | 9825.4 | 466.6 |
| hydrogen | kg/h | 0.007 | **0.128** | 0.000 | 0.005 | 0.131 |
| methane | kg/h | 0.098 | **0.121** | 0.000 | 0.005 | 0.215 |
| ethylene | kg/h | 317 | 20.1 | 2 | 87 | 248 |
| ethane | kg/h | 19 | **0.49** | 0.17 | 6 | 13 |
| solvent | kg/h | 9853 | 1.70 | 944 | 8852 | 59 |
| 1-butene | kg/h | 651 | 0.99 | 25 | 543 | 84 |
| iso-butenes | kg/h | 414 | 0.74 | 15 | 337 | 62 |

The process according of IE3 in comparison to CE2 has an improved ethylene recovery, as ethylene losses by waste vapor stream (b) are reduced by 40%. Moreover, comparable amounts of hydrogen (128 g/h ) are removed from the feed vessel in IE3 and CE2. The ethane and methane removal in IE3 has slightly been reduced compared to CE2.

## Claims

1. A feeding device for preparing a feed stream **(a)** for a solution polymerization, comprising a feed vessel **(1),** the feed vessel **(1)** comprising:
- a top zone **(2)** and a bottom zone **(3);**
- a feed outlet **(4)** for withdrawing the feed stream **(a),** wherein the feed outlet **(4)** is fluidly connected with the bottom zone **(3);**
- a waste outlet **(5)** for withdrawing a waste vapor stream **(b),** wherein the waste outlet **(5)** is fluidly connected with the top zone **(2);**
- an absorber **(6)** positioned below the top zone **(2);**
- a first inlet **(7)** for introducing a fresh liquid stream **(c)** into or on top of the absorber **(3),** wherein the first inlet **(7)** is fluidly connected with the absorber **(6);**
- a first heat exchanger **(8)** positioned upstream of the first inlet **(7)** for cooling the fresh liquid stream **(c)** prior to introducing the fresh liquid stream **(c)** into or on top of the absorber **(6);**
- a second inlet **(9)** for introducing a recycle liquid stream **(d),** wherein the second inlet **(9)** is positioned below the first inlet **(7);** and
- a third inlet **(10)** for introducing a recycle vapor stream **(e),** wherein the third inlet **(10)** is positioned below the second inlet **(9)** and above the feed outlet **(4),**
wherein the feed vessel **(1)** does not comprise a heat exchanger in the top zone **(2).**

2. The feeding device according to claim 1, wherein the feed vessel **(1)** does not comprise a heat exchanger in the flow path between the absorber **(6)** and the waste outlet **(5).**

3. The feeding device according to claims 1 or 2, wherein the feed vessel **(1)** further comprises a first distributor **(11)** positioned above the second inlet **(9).**

4. The feeding device according to any of the preceding claims 1 to 3, wherein the second inlet **(9)** is fluidly connected with the absorber **(6).**

5. The feeding device according to any of the preceding claims 1 to 4, wherein the feed vessel **(1)** further comprises a third distributor **(14)** located above the third inlet **(10).**

6. The feeding device according to any of the preceding claims 1 to 5, wherein the third inlet **(10)** is located in the bottom zone **(3)** and wherein the third inlet **(10)** further comprises a dosing pipe **(13)** extending into the bottom zone **(3).**

7. The feeding device according to any of the preceding claims 1 to 6, wherein the feed vessel **(1)** further comprises a purge condenser **(15),** wherein the purge condenser is configured to receive the waste vapor stream **(b)** and to produce a vapor purge stream **(b')** and a waste recycle stream **(b"),** and
wherein the feed vessel **(1)** further comprises a fourth inlet **(7'),** wherein the fourth inlet **(7')** is fluidly connected with the absorber **(6),** and wherein the fourth inlet **(7')** is configured to receive the waste recycle stream **(b").**

8. The feeding device according to any of the preceding claims 1 to 7, wherein the second inlet **(9)** further comprises a spraying device configured to spray the recycle liquid stream **(d)** into the feed vessel **(1).**

9. A solution polymerization reactor assembly comprising a feeding device according to any of the preceding claims 1 to 8.

10. A process for preparing a feed stream **(a)** for a solution polymerization, the feed stream **(a)** comprising at least one solvent, a monomer and optional one comonomer, the process comprising the steps of:
(i) providing at least one fresh liquid stream **(c)** comprising the at least one solvent and optional comonomer
(ii) cooling the at least one fresh liquid stream **(c)** yielding a cooled fresh liquid stream **(c1)** to a temperature below 300 K;
(iii) providing at least one recycle liquid stream **(d)** comprising the at least one solvent, the optional comonomer and the monomer, wherein the monomer preferably is a recycled monomer;
(iv) providing at least one vapor recycle stream **(e)** comprising the monomer, wherein the monomer preferably is a recycled monomer;
(v) combining a contacted fresh liquid stream **(c2)** with the at least one recycle liquid stream **(d)** yielding a contacted recycle liquid stream **(d1);**
(vi) contacting the at least one recycle vapor stream **(e)** with the contacted recycle liquid stream **(d1)** yielding the feed stream **(a)** and a contacted recycle vapor stream **(e1);**
(vii) contacting the contacted recycle vapor stream **(e1)** with the at least one cooled fresh liquid stream **(c1)** yielding the contacted fresh liquid stream **(c2)** and a waste vapor stream **(b);**
(viii) withdrawing the waste vapor stream **(b);**
(ix) withdrawing the feed stream **(a);**
wherein the waste vapor stream **(b)** is not further condensed prior to step (viii).

11. The process according to claim 10, wherein the process comprises a condensed phase **(3)** and wherein in step (iv) the at least one vapor recycle stream **(e)** is provided by introduction into the condensed phase **(3).**

12. The process according to claims 10 or 11, wherein the fresh liquid stream **(c)** in step (ii) is cooled to a temperature below 295 K, preferably below 290 K, and most preferably below 285 K.

13. The process according to any of the preceding claims 10 to 12, wherein step (v) is carried out within step (vii) so that the contacted fresh liquid stream **(c2)** is also contacted with the contacted recycle vapor stream **(e1).**

14. The process according to any of the preceding claims 10 to 13, further comprising the step of:
(x) distributing the recycle liquid stream **(d)** before step (v).

15. The process according to any of the preceding claims 10 to 14 further comprising the step of:
(xi) distributing the recycle vapor stream **(e)** before step (vi).
